# EUROPEAN PATENT SPECIFICATION

(11) **EP 0 345 847 B1**
(45) Date of publication and mention of the grant of the patent: **04.08.1993**
(21) Application number: 89201286.5
(22) Date of filing: 19.05.1989
(51) Int. Cl.: C08G 67/02, B01J 31/16

(54) **Process for the preparation of polymers**
Verfahren zur Herstellung von Polymeren
Procédé pour la préparation de polymères

(30) Priority: 08.06.1988 NL 8801472
(43) Date of publication of application: 13.12.1989
(73) Proprietor: SHELL INTERNATIONALE RESEARCH MAATSCHAPPIJ B.V., 2596 HR Den Haag (NL)
(72) Inventor: Van Doorn, Johannes Adrianus, NL-1031 CM Amsterdam (NL); Drent, Eit, NL-1031 CM Amsterdam (NL)

(56) References cited:
- EP-A- 0 239 145
- EP-A- 0 248 483
- EP-A- 0 305 011
- CHEMICAL ABSTRACTS, vol. 91, no. 18, 29 October 1979, page 666, left hand column, abstract no. 150465y, Columbus, Ohio, USA; F. R. HARTLEY et al.: "Systematics of palladium (II) and platinum (II) dithioether complexes. The effect of ligand structure upon the structure and spectra of the complexes and upon inversion at coordinated sulfur"

## Description

The invention relates to a process for the preparation of polymers of carbon monoxide with one or more olefinically unsaturated compounds.

Linear polymers of carbon monoxide with one or more olefinically unsaturated aliphatic compounds (for the sake of brevity referred as A), in which the monomer units -(CO)- on the one hand, and the units -A'- originating in the applied monomers A on the other hand, occur in alternating order, can be prepared by contacting the monomers at an elevated temperature and pressure with a catalyst composition comprising a Group VIII metal and a phosphorus bidentate ligand of the general formula R¹R²P-R-PR³R⁴, wherein R¹, R², R³ and R⁴ are the same or different, optionally polar-substituted, hydrocarbyl groups and R represents a bivalent bridging group containing at least two carbon atoms in the bridge.

For some uses, it may be desirable to have such linear alternating polymers in which optionally substituted phenyl groups are present as side groups attached to the main chains. Attempts at preparing such polymers by using the afore-mentioned catalyst compositions starting from a monomer mixture which, in addition to carbon monoxide, contains one or more optionally substituted styrenes (for the sake of brevity referred as B) have thus far remained unsuccessful. Although they are excellently suitable for the preparation of linear polymers made up of units -(CO)-A'-, these catalyst compositions have proven unsuitable for preparing linear polymers made up of units -(C)-B'-, wherein B' represents a monomer unit originating in an applied monomer B.

During an investigation carried out by the Applicant into these polymers some time ago, it was found that starting from monomer mixtures which, in addition to carbon monoxide, contain one or more monomers B, it is possible to prepare linear polymers in which the monomer units -(CO)- on the one hand, and the monomer units -B'- originating in the applied monomers B on the other hand, occur in alternating order, provided that in the afore-described catalyst compositions, the phosphorus bidentate ligand is replaced by a nitrogen bidentate ligand of the general formula 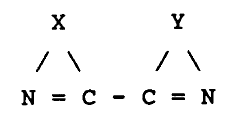
wherein X and Y represent similar or different organic bridging groups each containing three or four atoms in the bridge at least two of which are carbon atoms. During the investigation, it was further established that polymerization of carbon monoxide with a monomer B by using the afore-described catalyst compositions containing a nitrogen bidentate ligand proceeds both regiospecifically and stereospecifically, which means that in the polymers obtained, the monomers are incorporated on the head/tail principle and that the side groups exhibit a regular spacial arrangement relative to the main chain.

At the time of the afore-mentioned research, regio-regular, stereo-regular polymers were known, notably from the literature concerning the polypropylene chemistry. Such polymers are referred to as isotactic or syndiotactic polymers. Linear alternating polymers of carbon monoxide with a monomer B which are both regio-regular and stereo-regular, however, were not known at the time of the afore-mentioned research. The Applicant was the first to prepare these. From the afore-mentioned literature, polymers are also known which, like the isotactic and syndiotactic polymers, are regio-regular, but in which the side chains exhibit a random spatial arrangement relative to the main chain. In the literature, such regio-regular, stereo-irregular polymers are referred to as atactic polymers.

Further research carried out by the Applicant into the subject has now shown that starting from monomer mixtures containing a monomer B in addition to carbon monoxide, linear alternating copolymers can be prepared which are regio-regular and stereo-irregular, provided that in the afore-described catalyst compositions, the bidentate ligand component that is taken up is a compound of the general formula R¹M¹-R-M²R², wherein M¹ and M² are the same or different elements chosen from the group made up of sulphur, selenium and tellurium and R, R¹ and R² have the meanings mentioned hereinbefore. The linear, alternating regio-regular, stereo-irregular copolymers of carbon monoxide with an optionally substituted styrene, which can be prepared by employing these catalyst compositions are novel. During the research done by the Applicant, it was further found that the catalyst compositions are not only suitable for the preparation of the afore-mentioned linear alternating regio-regular, stereo-irregular copolymers, but that they can be suitably used in general for preparing linear alternating polymers of carbon monoxide with one or more olefinically unsaturated compounds, for which preparation up to now mainly catalyst compositions containing a phosphorus bidentate ligand were used.

The present patent application therefore relates to a process for the preparation of polymers, characterized in that a mixture of carbon monoxide with one or more olefinically unsaturated compounds is contacted at elevated temperature and pressure with a catalyst composition comprising a Group VIII metal and a compound of the general formula R¹M¹-R-M²R², wherein M¹ and M² are the same or different elements chosen from the group made up of sulphur, selenium and tellurium, R¹ and R² are the same or different, optionally polar-substituted, hydrocarbyl groups and R represents a bivalent bridging group containing at least two carbon atoms in the bridge.

The patent application further relates to linear alternating regio-regular, stereo-irregular copolymers of carbon monoxide with an optionally substituted styrene, as novel compounds.

The use of sulphur bidentate ligands in the catalyst compositions applied in the process of the invention offers a number of advantages over the use of phosphorus bidentate ligands. First, the sulphur-containing starting materials from which the sulphur bidentate ligands are prepared are considerably cheaper than the phosphorus-containing starting materials needed for the preparation of phosphorus bidentate ligands. Further, the preparation of sulphur bidentate ligands is in general much simpler to accomplish and therefore cheaper than the preparation of phosphorus bidentate ligands. Finally, the sulphur bidentate ligands are much less sensitive to oxidation than the phosphorus bidentate ligands.

In the present patent application, Group VIII metals should be taken to be the noble metals ruthenium, rhodium, palladium, osmium, iridium and platinum, and the iron group metals iron, cobalt and nickel.

In the catalyst compositions used in the process of the invention, the preferred Group VIII metal is chosen from palladium, nickel and cobalt. Special preference is given to palladium as Group VIII metal. By preference, the Group VIII metal is taken up in the catalyst composition in the form of a salt of a carboxylic acid, in particular in the form of an acetate. In addition to a Group VIII metal and a compound of the general formula R¹M¹-R-M²R², the catalyst compositions preferably include an anion of an acid with a pKa of less than 4 (determined in aqueous solution at 18 °C) and in particular an anion of an acid with a pKa of less than 2. Examples of acids with a pKa of less than 2 are sulphuric acid, perchloric acid, sulphonic acids, such as methanesulphonic acid, trifluoromethanesulphonic acid and para-toluenesulphonic acid, and halogen carboxylic acids, such as trichloroacetic acid, difluoroacetic acid and trifluoroacetic acid. Preference is given to a sulphonic acid, such as para-toluenesulphonic acid or a halogen carboxylic acid, such as trifluoroacetic acid. The anion of an acid with a pKa of less than 4 may be taken up in the catalyst composition in the form of an acid and/or in the form of a salt, such as a cupric salt. Preferably, the anion is present in the catalyst compositions in a quantity of 1-1000 and in particular of 2-100 equivalents per mol of Group VIII metal. The anions of acids with a pKa of less than 4 may be present in the catalyst compositions because they have been added as separate components, or because such a palladium compound, for instance, as palladium trifluoroacetate or palladium para-tosylate, was used, or because a compound of the general formula R¹M¹-R-M²R² was used in which the groups R, R¹ and/or R² contained one or more carboxylic acid groups or sulphonic acid groups.

In addition to a Group VIII metal, a compound of the general formula R¹M¹-R-M²R² and, optionally, an anion of an acid with a pKa of less than 4, the catalyst compositions used in the process of the invention preferably also include an organic oxidant. Examples of suitable organic oxidants are 1,2- and 1,4-quinones, aliphatic nitrites, such as butyl nitrite and aromatic nitro compounds, such as nitro benzene and 2,4-dinitro toluene. Preference is given to 1,4-benzoquinone and 1,4-naphthoquinone. The quantity of organic oxidant used preferably amounts to 1-10000 and in particular 10-5000 mol per mol of Group VIII metal.

In the process of the invention, the compound of the general formula R¹M¹-R-M²R² is preferably present in a quantity of 1-1000 and in particular 2-100 mol per mol of group VIII metal. In the compounds of the general formula R¹M¹-R-M²R², M¹ and M² are the same or different elements chosen from the group made up of sulphur, selenium and tellurium. An example of a compound in which M¹ and M² differ from one another, is cis-1-methylseleno-2-methyltelluroethene. Examples that may be mentioned of compounds in which M¹ and M² are the same, are among others
1,2-bis(ethylthio)ethane,
1,2-bis(phenylseleno)ethane,
1,2-bis(phenyltelluro)ethane, and
1,3-bis(methylthio)-2,2-bis(methylthiomethyl)propane.

In the catalyst compositions used in the process of the invention, it is preferred to employ compounds of the general formula R¹M¹-R-M²R² in which M¹ and M² are the same. In the compounds of the general formula R¹M¹-R-M²R², R¹ and R² are the same or different, optionally polar-substituted, hydrocarbyl groups. Examples of compounds in which R¹ and R² differ from one another, are 1-(4-methoxyphenylthio)-3-octylthio-2,2-dimethylpropane, 1-butylthio-2-(2-tert.butylthioethylthio)ethane, and 1-methylthio-2-(2-methoxycarbonyl-2-acetylaminoethylthio)ethane.

In the process of the invention, it is preferred to employ compounds of the general formula R¹M¹-R-M²R² in which R¹ and R² are the same.

Examples that may be mentioned of compounds in which R¹ and R² are the same, are among others
1,3-bis(phenylthio)propane,
1,2-bis(phenylthio)propane,
1,2-bis(phenylthio)ethane,
1,3-bis(methylthio)propane, and
1,2-bis(2,4-dimethylphenylthio)ethane.

Examples that may be mentioned of compounds in which R¹ and R² are identical polar-substituted hydrocarbyl groups are:
1,2-bis(2-methoxyphenylthio)ethane,
1,2-bis(4-methoxyphenylthio)ethane,
1,2-bis(3,4-dichlorophenylthio)ethane,
1,2-bis(2,4,6-trimethoxyphenylthio)ethane,
1,2-bis(4-acetylaminophenylthio)ethane,
1,2-bis(2,4-dimethoxyphenylthio)ethane,
1,2-bis(methoxycarbonylmethylthio)ethane,
1,2-bis(methoxyethylthio)ethane, and
1,2-bis(2-dimethylaminocarbonylethylthio)ethane.

R¹ and R² may also be heterocyclic, as in 1,2-bis(3-tetrahydrofurylthio)ethane, or together form part of a cylic system, as in the following thio crown ethers:
1,4,7,10-tetrathiacyclododecane,
1,5,9,13-tetrathiacyclohexadecane,
1,4,8,11-tetrathiacyclotetradecane,
1,4,7-trithiacyclononane, and
1,4,7,10,13,16-hexathiacyclooctadecane.

In the compounds of the general formula R¹M¹-R-M²R², R is a bivalent bridging group containing at least two carbon atoms in the bridge. Bridging group R may form part of a benzene ring, as in
1,2-bis(methylseleno)benzene,
1,2-bis(methylthio)benzene,
1-methyl-3,4-bis(propylthio)benzene, and
1,4-dihydroxy-2,3,5,6-tetrakis(methylthio)benzene.

Bridging group R may also form part of two benzene rings, as in 1,8-bis(butylthio)naphthalene and 2,2'-bis(butylthio)biphenyl, or of a quinone ring, as in 2,2-bis(methylthio)-1,4-naphthoquinone and 2,3,5,6-tetrakis(methylthio)-1,4-benzoquinone.

In the process of the invention, it is preferred to employ catalyst compositions containing compounds of the general formula R¹M¹-R-M²R² in which bridging group R contains exclusively two carbon atoms in the bridge, and in particular compounds in which these two carbon atoms occur doubly bonded and in which the groups R¹M¹- and R²M²- are present in cis position in respect to one another. Examples of such compounds are
cis-1,2-bis(benzylthio)ethene,
cis-1,2-bis(phenylthio)ethene,
cis-1,2-bis(benzylseleno)ethene,
cis-1,2-bis(benzyltelluro)ethene,
cis-1,2-bis(phenylseleno)ethene,
cis-1,2-bis(methylthio)ethene,
cis-1,2-bis(methylseleno)ethene,
cis-1,2-bis(methyltelluro)ethene,
cis-1,2-bis(methylthio)-1,2-bis(methoxycarbonyl)ethene,
cis-1,2-bis(methylthio)-1,2-dichloroethene, and
cis-1,2-bis(2-dimethylaminocarbonylethylthio)ethene.

Polymerization by using the process of the invention is preferably carried out by contacting the monomers with a solution of the catalyst composition in a diluent in which the polymers are insoluble or virtually insoluble. Very suitable diluents are lower alcohols such as methanol. The polymerization may also be carried out in the gaseous phase, if desired. Eligible olefinically unsaturated compounds which can be polymerized with carbon monoxide by using the process of the invention are compounds which consist exclusively of carbon and hydrogen as well as compounds which, in addition to carbon and hydrogen, contain one or more hetero atoms. Examples of the latter compounds are para-chlorostyrene, para-methoxystyrene and para-carboxystyrene. The process of the invention is preferably applied for preparing polymers of carbon monoxide with one or more olefinically unsaturated hydrocarbons. Examples of suitable hydrocarbon monomers are ethene and other α-olefins, such as propene, butene-1, hexene-1 and octene-1, styrene and alkyl-substituted styrenes, such as para-methylstyrene and para-ethylstyrene, norbornene and dicyclopentadiene. The process of the invention is in particular very suitable for application in the preparation of copolymers of carbon monoxide with ethene and for the preparation of terpolymers of carbon monoxide with ethene and another olefinically unsaturated hydrocarbon, in particular propene.

The quantity of catalyst composition employed in the preparation of the polymers may vary within wide limits. The quantity of catalyst used per mol of olefinically unsaturated compound to be polymerized preferably contains 10⁻⁷-10⁻³ and in particular 10⁻⁶-10⁻⁴ mol of Group VIII metal.

The preparation of the polymers is preferably carried out at a temperature of 20-150 °C and a pressure of 2-150 bar and in particular at a temperature of 30-130 °C and a pressure of 35-100 bar. The molar ratio of olefinically unsaturated compounds relative to carbon monoxide in the mixture to be polymerized is preferably 10:1-1:10 and in particular 5:1-1:5.

The invention will now be illustrated with the aid of the following examples.

### Example 1

A carbon monoxide/ethene copolymer was prepared as follows. A stirred autoclave with a capacity of 250 ml was charged with a catalyst solution comprising
50 ml methanol,
0.1 mmol palladium acetate,
0.3 mmol para-toluenesulphonic acid,
0.5 mmol 1,2-bis(ethylthio)ethane, and
20 mmol 1,4-benzoquinone.

After air present in the autoclave had been removed by evacuation, 20 bar ethene was blown in, followed by 30 bar carbon monoxide. Then, the contents of the autoclave were brought to a temperature of 80 °C. Polymerization was terminated after 5 hours, by cooling to room temperature and releasing the pressure. The polymer was filtered off, washed with methanol and dried in vacuo at 70 °C.

5.3 g of copolymer was obtained.

### Example 2

A carbon monoxide/ethene copolymer was prepared substantially in the same way as the copolymer of Example 1, the difference being that now the catalyst solution comprised 30 mmol of 2,4-dinitrotoluene instead of 1,4-benzoquinone.

7.5 g of copolymer was obtained.

### Example 3

A carbon monoxide/ethene copolymer was prepared substantially in the same way as the copolymer of Example 1, except for the following differences
a) the catalyst solution comprised 1.5 mmol of 1,3-bis(phenylthio)propane instead of 1,2-bis(ethylthio) ethane, and 0.5 mmol instead of 0.3 mmol of para-toluenesulphonic acid, and
b) the reaction time was 1.5 instead of 5 hours.

3.5 g of copolymer was obtained.

### Example 4

A carbon monoxide/ethene copolymer was prepared substantially in the same way as the copolymer of Example 1, except for the following differences
a) the catalyst solution comprised 0.5 mmol of cis-1,2-bis(benzylthio)ethene instead of 1,2-bis(ethylthio)ethane, and
b) the reaction temperature was 50 °C instead of 80 °C.

19.3 g of copolymer was obtained.

### Example 5

A carbon monoxide/ethene copolymer was prepared substantially in the same way as the copolymer of Example 1, except for the following differences
a) the catalyst solution comprised 0.3 mmol of 1,2-bis(phenylseleno)ethane instead of 1,2-bis(ethylthio) ethane, and 0.2 mmol instead of 0.3 mmol of para-toluenesulphonic acid, and
b) the reaction temperature was 70 °C instead of 80 °C.

11.3 g of copolymer was obtained.

### Example 6

A carbon monoxide/ethene copolymer was prepared substantially in the same way as the copolymer of Example 1, the difference being that now the catalyst solution comprised 3 mmol of 1,2-bis(phenylthio)propane instead of 1,2-bis(ethylthio)ethane, and 0.5 mmol instead of 0.3 mmol of para-toluenesulphonic acid.

14.9 g of copolymer was obtained.

### Example 7

A carbon monoxide/ethene copolymer was prepared substantially in the same way as the copolymer of Example 1, except for the following differences
a) the catalyst solution comprised 0.3 mmol of 1,2-bis(phenylthio)ethane instead of 1,2-bis(ethylthio)ethane, and 0.2 mmol instead of 0.3 mmol of para-toluenesulphonic acid, and
b) the reaction temperature was 50 °C instead of 80 °C.

2.1 g of copolymer was obtained.

### Example 8

A carbon monoxide/ethene copolymer was prepared substantially in the same way as the copolymer of Example 1, except for the following differences
a) the catalyst solution comprised 0.3 mmol of 1,2-bis(methoxyphenylthio)ethane instead of 1,2-bis(ethylthio)ethane, and 0.2 mmol instead of 0.3 mmol of para-toluenesulphonic acid, and
b) the reaction temperature was 50 °C instead of 80 °C.

4.7 g of copolymer was obtained.

### Example 9

A carbon monoxide/ethene copolymer was prepared substantially in the same way as the copolymer of Example 5, except that 40 bar instead of 20 bar ethene and 20 bar instead of 30 bar carbon monoxide were blown into the autoclave.

12 g of copolymer was obtained.

### Example 10

A carbon monoxide/ethene copolymer was prepared substantially in the same way as the copolymer of Example 1, except for the following differences
a) the catalyst solution comprised 2 mmol instead of 0.3 mmol of para-toluenesulphonic acid and 3 mmol instead of 0.5 mmol of 1,2-bis(ethylthio)ethane, and
b) the reaction temperature was 100 °C instead of 80 °C.

16.5 g of copolymer was obtained.

### Example 11

A carbon monoxide/ethene copolymer was prepared substantially in the same way as the copolymer of Example 10 except that the catalyst solution contained no 1,4-benzoquinone.

8.5 g of copolymer was obtained.

### Example 12

A carbon monoxide/ethene copolymer was prepared substantially in the same way as the copolymer of Example 1, except for the following differences
aa) the catalyst solution comprised 2 mmol of trifluoroacetic acid instead of para-toluenesulphonic acid and 3 mmol instead of 0.5 mmol of 1,2-bis(ethylthio) ethane, and
b) the reaction temperature was 100 °C instead of 80 °C.

7.5 g of copolymer was obtained.

### Example 13

A carbon monoxide/styrene copolymer was prepared as follows. A stirred autoclave with a capacity of 250 ml was charged with 30 ml of styrene and 20 ml of methanol. In this mixture was dissolved a catalyst composition comprising
0.1 mmol palladium acetate,
0.5 mmol para-toluenesulphonic acid,
1.5 mmol 1,2-bis(ethylthio)ethane, and
20 mmol 1,4-benzoquinone.

After air present in the autoclave had been removed by evacuation, 40 bar carbon monoxide was blown in. Then, the contents of the autoclave were brought to a temperature of 75 °C. Polymerization was terminated after 5 hours, by cooling to room temperature and releasing the pressure. The polymer was precipitated by adding methanol, filtered off, washed with methanol and dried in vacuo at 70 °C.

6.5 g of copolymer was obtained.

### Example 14

A carbon monoxide/styrene copolymer was prepared substantially in the same way as the copolymer of Example 13, the difference being that now the catalyst composition comprised 30 mmol of 2,4-dinitrotoluene instead of 1,4-benzoquinone.

23 g of copolymer was obtained.

### Example 15

A carbon monoxide/styrene copolymer was prepared substantially in the same way as the copolymer of Example 13, except for the following differences
a) the catalyst composition comprised 0.3 mmol instead of 0.5 mmol of para-toluenesulphonic acid and 0.5 mmol of cis-1,2-bis(benzylthio) ethene instead of 1,2-bis(ethylthio)ethane, and
b) the reaction temperature was 50 °C instead of 75 °C.

3.3 g of copolymer was obtained.

### Example 16

A carbon monoxide/styrene copolymer was prepared substantially in the same way as the copolymer of Example 13, except for the following differences
a) 20 ml of diethylene glycol and 10 ml of tetrahydrofuran were introduced into the autoclave instead of 20 ml of methanol, and
b) the catalyst composition comprised 30 mmol 2,4-dinitrotoluene instead of 1,4-benzoquinone.

6.5 g of copolymer was obtained.

### Example 17

A carbon monoxide/styrene copolymer was prepared substantially in the same way as the copolymer of Example 13, except for the following differences
a) 20 ml instead of 30 ml of styrene and 30 ml instead of 20 ml of methanol were introduced into the autoclave, and
b) the catalyst composition comprised 0.5 mmol of copper para-tosylate instead of para-toluenesulphonic acid, and 3 mmol instead of 1.5 mmol of 1,2-bis(ethylthio)ethane.

4.1 g of copolymer was obtained.

### Example 18

A carbon monoxide/norbornene copolymer was prepared substantially in the same way as the carbon monoxide/styrene copolymer of Example 13, except for the following differences
a) 30 ml of norbornene instead of styrene was introduced into the autoclave,
b) the catalyst composition comprised 30 mmol of 2,4-dinitrotoluene instead of 1,4-benzoquinone,
c) the reaction temperature was 50 °C instead of 75 °C, and
d) the reaction time was 15 instead of 5 hours.

3.8 g of copolymer was obtained.

### Example 19

A carbon monoxide/dicyclopentadiene copolymer was prepared substantially in the same way as the carbon monoxide/styrene copolymer of Example 13, except for the following differences
a) 30 ml of dicyclopentadiene instead of styrene was introduced into the autoclave,
b) the catalyst composition comprised 30 mmol of 2,4-dinitrotoluene instead of 1,4-benzoquinone,
c) the reaction temperature was 50 °C instead of 75 °C, and
d) the reaction time was 15 instead of 5 hours.

5.6 g of copolymer was obtained.

### Example 20

A carbon monoxide/ethene copolymer was prepared substantially in the same way as the copolymer of Example 1, except for the following differences
a) the catalyst solution comprised 0.5 mmol of 1,2-bis(propylthio)-4-methylbenzene instead of 1,2-bis(ethylthio)ethane, and
b) the reaction temperature was 50 °C instead of 80 °C.

10.5 g of copolymer was obtained.

### Example 21

A carbon monoxide/ethene copolymer was prepared substantially in the same way as the copolymer of Example 7, except that the catalyst solution comprised 3 mmol instead of 0.3 mmol of 1,2-bis(phenylthio)ethane.

15.2 g of copolymer was obtained.

### Example 22

A carbon monoxide/ethene copolymer was prepared substantially in the same way as the copolymer of Example 1, except for the following differences
a) the catalyst solution comprised 0.75 mmol of cis-1,2-bis(methylseleno)ethene instead of 1,2-bis(ethylthio)ethane, and 0.5 mmol instead of 0.3 mmol of p-toluenesulphonic acid, and
b) the reaction temperature was 50 °C instead of 80 °C.

3.4 g of copolymer was obtained.

### Example 23

A carbon monoxide/ethene copolymer was prepared substantially in the same way as the copolymer of Example 1, except for the following differences
a) the catalyst solution comprised 0.3 mmol of 1-methylthio-2-methylselenobenzene instead of 1,2-bis(ethylthio)ethane, and 0.2 mmol instead of 0.3 mmol of p-toluenesulphonic acid, and
b) the reaction temperature was 60 °C instead of 80 °C.

14.9 g of copolymer was obtained.

### Example 24

A carbon monoxide/ethene copolymer was prepared substantially in the same way as the copolymer of Example 1, except for the following differences
a) the catalyst solution comprised 0.3 mmol of 1,2-bis(methyltelluro)benzene instead of 1,2-bis(ethylthio)ethane, and 0.2 mmol instead of 0.3 mmol of p-toluenesulphonic acid, and
b) the reaction temperature was 60 °C instead of 80 °C.

0.3 g of copolymer was obtained.

### Example 25

A carbon monoxide/ethene/methyl acrylate terpolymer was prepared substantially in the same way as the copolymer of Example 1, except for the following differences
a) the autoclave was charged with 40 ml of methanol and 10 ml of methyl acrylate, onto which was added a catalyst solution comprising
   0.1 mmol palladium acetate,
   0.2 mmol p-toluenesulphonic acid,
   0.3 mmol cis-1,2-bis(benzylthio)ethene, and
   20 mmol 1,4-benzoquinone, and
b) the reaction temperature was 60 °C instead of 80 °C.

13.1 g of terpolymer was obtained.

### Example 26

A carbon monoxide/ethene/allyl acetate terpolymer was prepared substantially in the same way as the copolymer of Example 1, except for the following differences
a) the autoclave was charged with 40 ml of methanol and 10 ml of allyl acetate, onto which was added a catalyst solution comprising
   0.1 mmol palladium acetate,
   0.2 mmol p-toluenesulphonic acid,
   0.75 mmol cis-1,2-bis(benzylthio)ethene, and
   20 mmol 1,4-benzoquinone, and
b) the reaction temperature was 50 °C instead of 80 °C.

15 g of terpolymer was obtained.

### Example 27

A carbon monoxide/ethene copolymer was prepared substantially in the same way as the copolymer of Example 1, except for the following differences
a) the autoclave was charged with 48 ml of tetrahydrofuran and 2 ml of methanol, into which was dissolved a catalyst composition comprising
   0.1 mmol palladium acetate,
   0.2 mmol p-toluenesulphonic acid,
   0.3 mmol 1,2-bis(propylthio)-4-methylbenzene, and
   20 mmol 1,4-benzoquinone, and
b) the reaction temperature was 50 °C instead of 80 °C.

11.4 g of copolymer was obtained.

### Example 28

The reaction product of a carbon monoxide/ethene copolymer and diethylene glycol was prepared substantially in the same way as the copolymer of Example 1, except for the following differences
a) the autoclave was charged with 47.5 ml of dimethyl ether and 2.5 ml of diethylene glycol, into which was dissolved a catalyst composition comprising
   0.1 mmol palladium acetate,
   0.2 mmol p-toluenesulphonic acid,
   3 mmol 1,2-bis(phenylthio)propane, and
   40 mmol 1,4-benzoquinone, and
b) the reaction temperature was 50 °C instead of 80 °C.

5 g of polymeric product was obtained.

With the aid of ¹³C-NMR analysis, it was established that the ter- and copolymers prepared according to Examples 1-27 had a linear structure and that in the polymer chains, the monomer units -(CO)- on the one hand, and the units originating in the applied hydrocarbon monomers on the other hand, occured in alternating order. With the aid of ¹³C-NMR analysis, it was also established that the carbon monoxide/styrene copolymers prepared according to Examples 13-17 were regio-regular but stereo-irregular.

The terpolymer prepared according to Example 25 contained 2 units derived from methyl acrylate, per 100 units derived from ethene, whereas the terpolymer prepared according to Example 26 contained 1.5 units derived from allyl acetate, per 100 units derived from ethene.

The polymeric product of Example 28 comprised linear, alternating carbon monoxide/ethene copolymer chains which were terminally linked through a diester of diethylene glycol. The polymeric product contained one unit derived from diethylene glycol per 20 units derived from ethene.

## Claims

1. Process for the preparation of polymers, characterized in that a mixture of carbon monoxide with one or more olefinically unsaturated compounds is contacted at elevated temperature and pressure with a catalyst composition comprising a Group VIII metal and a compound of the general formula R¹M¹-R-M²R², wherein M¹ and M² are the same or different elements chosen from the group made up of sulphur, selenium and tellurium, R¹ and R² are the same or different, optionally polar-substituted, hydrocarbyl groups and R represents a bivalent bridging group containing at least two carbon atoms in the bridge.

2. A process as claimed in claim 1, characterized in that the catalyst composition comprises palladium as Group VIII metal.

3. A process as claimed in claim 1 or 2, characterized in that the Group VIII metal is incorporated in the catalyst composition in the form of a salt of a carboxylic acid.

4. A process as claimed in one or more of claims 1-3, characterized in that in addition the catalyst composition includes an anion of an acid with a pKa of less than 4.

5. A process as claimed in claim 4, characterized in that the catalyst composition includes the anion of an acid with a pKa of less than 4 in a quantity of 1-1000 equivalents per mol of Group VIII metal.

6. A process as claimed in one or more of claims 1-5, characterized in that the catalyst composition in addition includes an organic oxidant.

7. A process as claimed in claim 6, characterized in that the catalyst composition includes a 1,4-quinone as organic oxidant.

8. A process as claimed in claim 6 or 7, characterized in that the catalyst composition includes the organic oxidant in a quantity of 1-10000 mol per mol of Group VIII metal.

9. A process as claimed in one or more of claims 1-8, characterized in that the catalyst composition comprises the compound of the general formula R¹M¹-R-M²R² in a quantity of 1-1000 mol per mol of Group VIII metal.

10. A process as claimed in one or more of claims 1-9, characterized in that in the compound of the general formula R¹M¹-R-M²R², bridging group R contains exclusively two carbon atoms in the bridge.

11. A process as claimed in any of claims 1-10, characterized in that the olefinically unsaturated compounds employed are hydrocarbons, such as ethene or a mixture of ethene and another olefinically unsaturated hydrocarbon, such as propene.

12. A process as claimed in one or more of claims 1-11, characterized in that it is carried out at a temperature of 20-150 °C, a pressure of 2-150 bar and a molar ratio of olefinically unsaturated compounds relative to carbon monoxide in the mixture to be polymerized of 10:1-1:10, and in that per mol of olefinically unsaturated compound to be polymerized, such a quantity of catalyst composition is used as to contain 10⁻⁷-10⁻³ mol of Group VIII metal.

13. Linear, alternating regio-regular stereo-irregular copolymers of carbon monoxide with an optionally substituted styrene.

## Patentansprüche

1. Verfahren zur Herstellung von Polymeren, dadurch gekennzeichnet, daß ein Gemisch von Kohlenmonoxid mit einer oder mehreren olefinisch ungesättigten Verbindungen bei erhöhter Temperatur und erhöhtem Druck mit einer Katalysatorzusammensetzung in Berührung gebracht wird, die ein Gruppe VIII-Metall und eine Verbindung der allgemeinen Formel R¹M¹-R-M²R² umfaßt, worin M¹ und M² gleiche oder verschiedene, aus der aus Schwefel, Selen und Tellur bestehenden Gruppe ausgewählte Elemente sind, R¹ und R² gleiche oder verschiedene, gegebenenfalls polar substituierte Kohlenwasserstoffgruppen darstellen und R eine zweiwertige Brückengruppe bedeutet, die wenigstens 2 Kohlenstoffatome in der Brücke enthält.

2. Verfahren nach Anspruch 1, dadurch gekennzeichnet, daß die Katalysatorzusammensetzung Palladium als Gruppe VIII-Metall umfaßt.

3. Verfahren nach Anspruch 1 oder 2, dadurch gekennzeichnet, daß das Gruppe VIII-Metall in Form eines Salzes einer Carbonsäure in die Katalysatorzusammensetzung aufgenommen ist.

4. Verfahren nach einem oder mehreren der Ansprüche 1 bis 3, dadurch gekennzeichnet, daß die Katalysatorzusammensetzung zusätzlich ein Anion einer Säure mit einem pKa-Wert von kleiner als 4 enthält.

5. Verfahren nach Anspruch 4, dadurch gekennzeichnet, daß die Katalysatorzusammensetzung das Anion einer Säure mit einem pKa-Wert von kleiner als 4 in einer Menge von 1 bis 1.000 Äquivalenten je Mol Gruppe VIII-Metall enthält.

6. Verfahren nach einem oder mehreren der Ansprüche 1 bis 5, dadurch gekennzeichnet, daß die Katalysatorzusammensetzung zusätzlich ein organisches Oxidationsmittel enthält.

7. Verfahren nach Anspruch 6, dadurch gekennzeichnet, daß die Katalysatorzusammensetzung ein 1,4-Chinon als organisches Oxidationsmittel enthält.

8. Verfahren nach Anspruch 6 oder 7, dadurch gekennzeichnet, daß die Katalysatorzusammensetzung das organische Oxidationsmittel in einer Menge von 1 bis 10.000 Mol je Mol Gruppe VIII-Metall enthält.

9. Verfahren nach einem oder mehreren der Ansprüche 1 bis 8, dadurch gekennzeichnet, daß die Katalysatorzusammensetzung die Verbindung der allgemeinen Formel R¹M¹-R-M²R² in einer Menge von 1 bis 1.000 Mol je Mol Gruppe VIII-Metall umfaßt.

10. Verfahren nach einem oder mehreren der Ansprüche 1 bis 9, dadurch gekennzeichnet, daß in der Verbindung der allgemeinen formel R¹M¹-R-M²R² die Brückengruppe R ausschließlich zwei Kohlenstoffatome in der Brücke enthält.

11. Verfahren nach einem der Ansprüche 1 bis 10, dadurch gekennezeichnet, daß die verwendeten olefinisch ungesättigten Verbindungen Kohlenwasserstoffe, wie Ethen, oder ein Gemisch von Ethen mit einem anderen olefinisch ungesättigten Kohlenwasserstoff, wie Propen, sind.

12. Verfahren nach einem oder mehreren der Ansprüche 1 bis 11, dadurch gekennzeichnet, daß es bei einer Temperatur von 20 bis 150°C, einem Druck von 2 bis 150 bar und einem Molverhältnis von olefinisch ungesättigten Verbindungen zu Kohlenmoxid in dem zu polymerisierenden Gemisch von 10:1 bis 1:10 ausgeführt wird, und daß je Mol olefinisch ungesättigter, zu polymerisierender Verbindung eine solche Menge an Katalysatorzusammensetzung verwendet wird, daß 10⁻⁷ bis 10⁻³ Mol an Gruppe VIII-Metall enthalten sind.

13. Lineare, alternierende, regio-reguläre, stereo-irreguläre Copolymere von Kohlenmonoxid mit einem gegebenenfalls substituierten Styrol.

## Revendications

1. Procédé pour la préparation de polymères, caractérisé en ce qu'un mélange d'oxyde de carbone avec un ou plusieurs composés oléfiniquement insaturés est mis en contact à température et pression élevées avec une composition catalytique comprenant un métal du groupe VIII et un composé de la formule générale R¹M¹-R-M²R², dans laquelle M¹ et M² sont des éléments identiques ou différents choisis dans le groupe constitué par le soufre, le sélénium et le tellure, R¹ et R² sont des groupes hydrocarbyle, portant éventuellement des substituants polaires, identiques ou différents et R représente un groupe bivalent formant pont contenant au moins deux atomes de carbone dans le pont.

2. Un procédé selon la revendication 1, caractérisé en ce que la composition catalytique comprend du palladium comme métal du groupe VIII.

3. Un procédé selon la revendication 1 ou 2, caractérisé en ce que le métal du groupe VIII est incorporé dans la composition catalytique sous la forme d'un sel d'un acide carboxylique.

4. Un procédé selon une ou plusieurs des revendications 1-3, caractérisé en ce que la composition catalytique comprend en outre un anion d'un acide d'un pKa de moins de 4.

5. Un procédé selon la revendication 4, caractérisé en ce que la composition catalytique comprend l'anion d'un acide d'un pKa de moins de 4 à raison de 1-1000 équivalents par mole de métal du groupe VIII.

6. Un procédé selon une ou plusieurs des revendications 1-5, caractérisé en ce que la composition catalytique comprend en outre un oxydant organique.

7. Un procédé selon la revendication 6, caractérisé en ce que la composition catalytique comprend une 1,4-quinone comme oxydant organique.

8. Un procédé selon la revendication 6 ou 7, caractérisé en ce que la composition catalytique comprend le composé de la formule générale R¹M¹-R-M²R² à raison de 1-1000 modes par mode de métal du groupe VIII.

9. Un procédé selon une ou plusieurs des revendications 1-8, caractérisé en ce que la composition catalytique comprend le composé de la formule générale R¹M¹-R-M²R² à raison de 1-1000 moles par mole de métal du groupe VIII.

10. Un procédé selon une ou plusieurs des revendications 1-9, caractérisé en ce que dans le composé de la formule générale R¹M¹-R-M²R², le groupe R formant pont contient exclusivement deux atomes de carbone dans le pont.

11. Un procédé selon l'une quelconque des revendications 1-10, caractérisé en ce que les composés oléfiniquement insaturés utilisés sont des hydrocarbures, tels que l'éthène ou un mélange d'éthène et d'un autre hydrocarbure oléfiniquement insaturé, tel que le propène.

12. Un procédé selon une ou plusieurs des revendications 1-11, caractérisé en ce qu'il est mis en oeuvre à une température de 20-150°C, une pression de 2-150 bars et un rapport modaire des composés oléfiniquement insaturés à l'oxyde de carbone dans le mélange à polymériser de 10:1-1:10, et en ce que, par mode de composé oléfiniquement insaturé à polymériser, on utilise une quantité de composition catalytique contenant 10⁻⁷-10⁻³ mole de métal du groupe VIII.

13. Copolymères linéaires alternés régio-réguliers, stéréo-irréguliers, d'oxyde de carbone avec un styrène éventuellement substitué.
